# EUROPÄISCHE PATENTANMELDUNG

(11) **EP 0 645 316 A1**
(43) Veröffentlichungstag der Anmeldung: **29.03.1995**
(21) Anmeldenummer: 94114892.6
(22) Anmeldetag: 21.09.1994
(51) Int. Cl.: B65D 19/32, B65D 19/40

(54) **Palette**

(30) Priorität: 24.09.1993 DE 9314469 U
(71) Anmelder: Stegmaier, Peter, D-73630 Remshalden (DE)
(72) Erfinder: Stegmaier, Peter, D-73630 Remshalden (DE)
(74) Vertreter: Dreiss, Fuhlendorf & Steimle Patentanwälte

(57) **Zusammenfassung**

Eine aus Kunststoff hergestellte Palette besteht im wesentlichen aus einer Platte (15) sowie einer Mehrzahl von Füßen (6 bis 14). Die Platte (15) ist ihrerseits in einem Sandwich-Verfahren aus einem oberen Plattenteil (1) und einem unteren Plattenteil (2) aufgebaut. Die Plattenteile sind am Rand durch Spiegelschweißung dicht miteinander verbunden, und mit Versteifungsrippen (17) versehen. Die Füße (6 bis 14) sind ebenfalls im Spiegelschweißverfahren an die Unterseite der Platte (15) angeschweißt an ihrer Unterseite außen bündig verschlossen. Dies erfolgt mittels eines umlaufenden Rahmens (27), der durch eine mittlere Leiste (4) ausgesteift ist.

## Beschreibung

Die Erfindung bezieht sich auf eine Palette aus sortenreinem Kunststoff und/oder aus nicht sortenreinem gemischtem Kunststoff, vorzugsweise Recyclingkunststoff, mit einer eine im wesentlichen ebene, geschlossene Auflagefläche für zu transportierendes und/oder zu lagerndes Gut aufweisenden Platte mit an ihrer Unterseite zumindest entlang des Außenumfangs angebrachten hohlen Standfüßen, zwischen denen sich Gabel-Einführaufnahmen befinden.

Eine solche Palette ist durch das DE-GM 91 13 329 bekannt geworden. Was die preisgünstige Herstellung und die Robustheit angeht, erfüllt diese Palette die an sie gestellten Forderungen. Es wird jedoch in manchen Anwendungsfällen als nachteilig angesehen, daß die Oberfläche dieser Palette vergleichsweise zerklüftet ist und somit viele Hohlräume entstehen, in denen sich Ablagerungen festsetzen können. Dies ist aber beispielsweise bei der Verwendung einer solchen Palette im Lebensmittelbereich, wie etwa auf einem Fischmarkt, unerwünscht, wenn nicht gar unannehmbar. Die Paletten müssen nämlich dort nach dem Gebrauch gründlich gereinigt werden, und dies ist umso problematischer, je mehr Hohlräume vorhanden sind.

Es liegt infolgedessen die Aufgabe vor, eine Palette der eingangs beschriebenen Art so auszubilden, daß sie besonders gut zu reinigen ist, ohne deshalb hinsichtlich der Herstellung oder der Robustheit Nachteile aufzuweisen.

Zur Lösung dieser Aufgabe wird erfindungsgemäß vorgeschlagen, eine derartige Palette entsprechend den im Anspruch 1 angegebenen Merkmalen auszubilden.

Weil die wenigstens beiden Plattenteile durch die an einer ihrer Flächen angebrachten Rippen versteift sind, kommen sie mit einer vergleichsweise geringen Wandstärke aus. Nach dem Zusammenfügen und festen Verbinden der beiden Plattenteile entsteht eine recht stabile, aufgrund ihrer zahlreichen inneren Hohlräume aber trotz der Gesamtdicke nicht übermäßig schwere Platte. Die Wanddicken können aber durchaus in der Größenordnung von einem Zentimeter liegen, während die Rippen etwas dünner gehalten werden können.

Jedes Plattenteil hat außen einen umlaufenden, senkrecht zu seiner Fläche vorstehenden Rand, wobei es sich insoweit um äußere Versteifungsrippen handeln kann. Auf jeden Fall dürfen die Versteifungsrippen nicht höher sein als der äußere umlaufende Rand. Beim dichten Verbinden der beiden Plattenteile werden zumindest die beiden gegeneinander weisenden, äußeren, umlaufenden Ränder der beiden Plattenteile oder, im Falle von mehreren Plattenteile, zumindest der beiden äußeren Plattenteile dicht miteinander verbunden. Damit entsteht eine ringsum glatte Platte, die besonders gut zu reinigen ist.

Nachdem auch die Füße an ihrem freien, im Gebrauch unteren Ende verschlossen sind, gibt es auch dort keinerlei Nischen oder Hohlräume, in welchen sich Schmutz, Lebensmittelreste und dergleichen absetzen können. Andererseits sind die Füße hohl, so daß sie trotz vergleichsweise großem Querschnitt kein zu großes Gewicht ergeben. Es ist insbesondere vorgesehen, daß klotzartige Füße mit quadratischem oder rechteckigem oder rundem Querschnitt verwendet werden, wobei dann mindestens eine der Flächen außen bündig mit dem Rand der Platte verläuft. Dadurch entstehen auch im Bereich der Füße keinerlei Hohlkehlen oder sonstige, das Reinigen erschwerende Vertiefungen. Zwischen den Füßen bzw. benachbarten Füßen befindet sich jeweils eine Gabel-Einführaufnahme. Das Handhaben dieser Palette unterscheidet sich also von der vorbekannten insoweit nicht.

Defekte Paletten können einer sinnvollen, wirtschaftlichen Wiederverwertung durch "mehrfaches Recycling" zugeführt und die Deponien dadurch entlastet werden. Durch diese Konstruktion wird auch eine "Hochregallager-Palette" erreicht, da im Hochregal die Kufen nur links und rechts als Auflagefläche dienen. Auch wird durch die geschlossene Version ein elektrisch-elektronisches Erkennen im H-Lager garantiert.

Eine Weiterbildung dieser Palette sieht vor, daß die unteren Enden wenigstens dreier Füße mittels einer gemeinsamen Leiste verbunden und durch diese zugleich verschlossen sind. Bei einer bevorzugterweise rechteckigen Palette verlaufen die Leisten zweckmäßigerweise parallel zur Längsseite der Platte. Sie sind insbesondere unterhalb des jeweiligen Längsrandes der Platte angeordnet, so daß sie zusammen eine Fläche begrenzen, die etwa der Größe der Platte entspricht. Demzufolge sind also die drei Füße jeder Leiste zwei Plattenecken und der Mitte des Längsrandes zugeordnet. Die Breite der Leiste entspricht etwa der Breite der Füße in gleicher Richtung gemessen. Die Dicke richtet sich nach den festigkeitsmäßigen Anforderungen. Diese Ausbildung entspricht inhaltlich Anspruch 3. Außerdem sind bevorzugterweise drei solcher Leisten mit drei Füßen vorgesehen sind, wobei sich die dritte Leiste zwischen den beiden randäußeren befindet. Damit ist diese Palette mit wenigstens neun Füßen versehen und besitzt dann an jeder ihrer Seiten zwei Gabel-Einführaufnahmen, so daß die Palette von allen vier Seiten her zugänglich ist.

Eine andere Variante der Erfindung ergibt sich aus Anspruch 4. Die Größe des dort erwähnten, aus vier Leisten bestehenden Rahmens entspricht bevorzugterweise der Plattengröße. Außerdem ist aus fertigungstechnischen Gründen vorgesehen, daß der Rahmen einstückig hergestellt ist. Die Breite der Rahmenleisten entspricht wiederum der Breite der darauf befindlichen Füße in dieser Richtung gemessen. Die Dicke ist zumindest in etwa gleich wie bei der anderen, nur Leisten aufweisenden Variante.

Um auch diese Palette mit neun Füßen ausstatten zu können, und vor allen Dingen eine gleichmäßig Abstützung der Platte zu gewährleisten, sieht eine weitere Ausgestaltung der Erfindung vor, daß, parallel zu einem Rahmenleistenpaar, eine mittlere Leiste mit dem Rahmen verbunden ist, die mittig einen weiteren Fuß trägt. Zweckmäßigerweise sind alle Leisten dieses Rahmens einstückig miteinander und vorzugsweise auch mit allen Füßen hergestellt. Wenn man anstelle eines umlaufenden, geschlossenen Rahmens nur drei parallele Leisten vorsieht, so hat dies den Vorteil, daß die Gabel eines Gabelstaplers bodenbündig unter die Palette gefahren werden kann. Dies gilt natürlich nur für die beiden Schmalseiten mit den Leistenenden. Ein umlaufender Rahmen bietet demgegenüber eine höhere Stabilität und Belastbarkeit.

Damit auch die Füße der meist hohen Belastung standhalten, wird in Weiterbildung der Erfindung vorgeschlagen, daß alle hohlen Füße mittels Rippen oder dergleichen Elementen versteift sind, wobei die Rippen quer zur Plattenfläche verlaufen, so daß sie durch die Last auf der Palette auf Druck belastet sind, wobei zwei kreuzweise angeordnete Leisten durchaus genügen können.

Gemäß dem Ausführungsbeispiel verlaufen in zweckmäßiger Weise die Versteifungsrippen der Plattenteile in Längs- und Querrichtung parallel zu den Plattenkanten. Gerade diese Anordnung ermöglicht es ohne weiteres, den erwähnten Umfassungsrand aus Versteifungsrippen zu bilden. Eine dichte Verbindung und eine preiswerte Herstellung ergeben sich in vorteilhafter Weise dadurch, daß die beiden Plattenteile miteinander durch Spiegelschweißung dicht verbunden sind. Zu diesem Zwecke befinden sich an den unmittelbar miteinander zu verbindenden Stellen entsprechende Ränder von vorzugsweise 2 mm Höhe.

In analoger Weise sieht eine weitere Ausgestaltung der Erfindung vor, daß die Unterseite der Platte mit den Füßen durch Schweißen, insbesondere Spiegelschweißen, verbunden ist, wobei auch insoweit die erwähnten etwa 2 mm hohen Leisten vorhanden sind.

Weil die Platte der Palette in angestrebter Weise nicht nur eben, sondern glatt ist und dies auch für die Stellfläche gilt, können zumindest die leeren Paletten, wenn man sie beim Transport aufeinanderstapelt, gegenseitig verrutschen. Um nun auch insoweit eine Verbesserung zu schaffen, sieht eine besonders bevorzugte Ausführungsform der Erfindung vor, daß rings um die obere Plattenfläche ein kleiner Zentrierrand vorsteht und an den Leisten bzw. Außenleisten des Rahmens entsprechende Hohlkehlen vorgesehen sind. Damit kann dann immer die Hohlkehle der oberen Palette in den kleinen bzw. niederen Zentrierrand eingreifen, wodurch man die nötige Sicherung in Querrichtung erhält. Der Zentrierrand verläuft selbstverständlich außen bündig mit den Plattenkanten, und er kann beispielsweise einige Millimeter oder etwa einen Zentimeter hoch sein. Damit sich auf der Plattenoberseite keine Flüssigkeit ansammeln kann, besteht der Zentrierrand bevorzugterweise aus in Verlängerung voneinander stehenden, leistenförmigen Randteilen, zwischen denen jeweils eine Abflußöffnung vorhanden ist. Wenn man letztere breit genug macht, so entstehen, hinsichtlich des Sauberhaltens und Reinigens, aus Anbringung des Zentrierrands keine Nachteile.

Die Plattenteile der Palette können entweder alle aus sogenannter Sekundärware, wie Recyclingmaterial aus nicht sortenreinem, gemischtem Kunststoff oder um Kunststoffabfälle aus einer Kunststoffertigung, oder nur teilweise daraus hergestellt werden. Beispielsweise kann es für bestimmte Anwendungsgebiete notwendig sein, den in Gebrauchslage oberen Plattenteil aus sogenannter Primärware, also neuem Kunststoff herzustellen. Um bei Verwendung von Recyclingmaterial ein ansprechendes, optisches Äußeres zu erhalten, wird dem Kunststoffmaterial ein entsprechendes Färbemittel zugefügt. Bevorzugterweise ist die Palette schieferfarben oder schwarz. Auf jeden Fall ist das Material, insbesondere durch die Beigabe des Färbemittels, auch UV-stabilisiert. Die Abmessungen können denen genormter Europaletten oder Chemiepaletten entsprechen.

Die Erfindung wird nachstehend anhand der Zeichnung näher beschrieben. Die Zeichnung zeigt verschiedene Ausführungsbeispiele der Erfindung. Hierbei stellen dar:

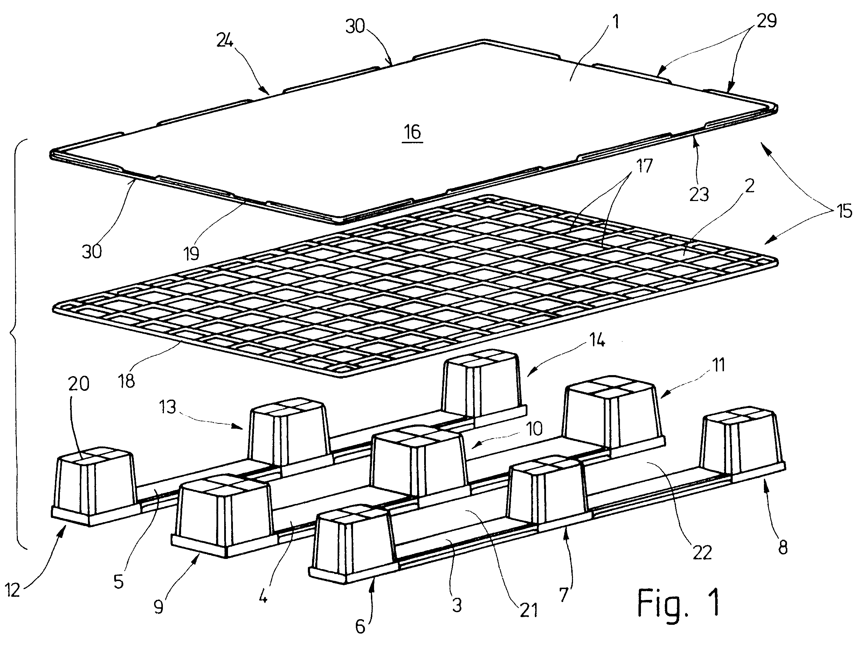

- Figuren 1 bis 3: jeweils in explosionsartiger und perspektivischer Darstellung eine Palette gemäß einem ersten, zweiten bzw. dritten Ausführungsbeispiel vorliegender Erfindung .

Die Palette des ersten Ausführungsbeispiels besteht auf fünf einzeln hergestellten Bauteilen, nämlich dem im Gebrauch oberen Plattenteil 1, dem unteren Plattenteil 2 sowie drei Leisten 3, 4 und 5 mit jeweils drei Füßen, nämlich den Füßen 6, 7 und 8 bzw. 9, 10 und 11 bzw. 12, 13 und 14. Dabei sind die Füße einstückig mit ihrer Leiste 3, 4, 5, beispielsweise aus sog. "Sekundärware", d.h. nicht sortenreinem, gemischtem Kunststoff, vorzugsweise Recyclingkunststoff, gefertigt. Diese Senkundärware wird beispielsweise auch für die Plattenteile 1 und 2 verwendet. Je nach dem Einsatzgebiet der Palette ist es notwendig, die gesamte Palette oder aber lediglich das im Gebrauch obere Plattenteil 1 aus sog. "Primärware", d.h. aus Neuware herzustellen. Beispielsweise kann es erforderlich sein, das obere Plattenteil 1 aus lebensmittelechten Kunststoff herzustellen.

In einer einfachsten Ausführungsform ist die aus den Plattenteilen 1 und 2 bestehende Platte 15, wenn man von Fertigungsunebenheiten absieht, außen völlig glatt. Dies gilt vor allen Dingen für die Auflagefläche 16 für das zu transportierende und/oder zu lagernde Gut, beispielsweise Kartons, Säcke und dergleichen. Außerdem sind dabei die beiden Plattenteile identisch, so daß sie mit ein und derselben Form hergestellt werden können. Beide Plattenteile sind auf einer Fläche mit Versteifungsrippen 17 versehen, welche parallel in Längs- und Querreihen angeordnet sein können. Dadurch wird außen eine umlaufender, vorstehender Rand 18 gebildet, der mindestens gleich hoch ist, wie die übrigen Versteifungsrippen. Vorzugsweise sind alle Versteifungsrippen, also auch diejenigen, die den Rand bilden, zumindest bei der fertigen Platten 15, gleich hoch. Die beiden Plattenteile 1 und 2 werden gemäß der Zeichnung so zusammengefügt, daß die Versteifungsrippen und die umlaufenden Ränder 18 des unteren Plattenteils 2 sowie 19 des oberen Plattenteils 1 unmittelbar aufeinanderliegen. Die beiden Plattenteile 1 und 2 werden insbesondere im Spiegelschweißverfahren miteinander dicht verbunden. Zu diesem Zwecke sind jeweils noch etwa 2 mm hohe Schweißränder vorhanden.

Die Füße 6 bis 14 sind etwa quaderförmige Hohlkörper. An ihrem in der Zeichnung oberen Ende sind sie offen, während ihr unteres Ende durch die zugeordnete Leiste 3 bzw. 4 bzw. 5 verschlossen ist. Außerdem befinden sich im Inneren, zum Zwecke der Versteifung, Rippen 20 oder dergleichen Elemente, vorzugsweise in kreuzförmiger Anordnung. Auch an den oberen Enden der Füße 6 bis 14 sowie der Unterseite des unteren Plattenteils 2 befinden sich ca. 2 mm hohe Schweißränder, weil auch die Leisten 3 bis 5 mit ihren Füßen durch insbesondere Spiegelschweißung fest und dauerhaft mit der Platte 15 verbunden werden.

Die Breite der Leisten 3 bis 5 entspricht, gemäß der Zeichnung, etwa der Breite der Füße, in gleicher Richtung gemessen. Die Länge der Füße, in Längsrichtung der Leisten gemessen, kann gleich oder auch verschieden, beispielsweise etwas länger als die Breite sein. Auf jeden Fall sind gemäß der Zeichnung, die senkrechten Kanten der Füße, zumindest außen, abgeschrägt, um das Einfahren von Gabeln eines Hubstaplers in die Gabel-Einführaufnahmen zu erleichtern und auch einem Beschädigen der Füße beim Einfahren der Gabelzinken vorzubeugen. In Figur 1 sind lediglich die beiden vorderen Gabel-Einführaufnahmen mit Bezugszahlen versehen, nämlich den Bezugszahlen 21 und 22. In bekannter Weise befinden sich an allen vier Seiten dieser Palette jeweils zwei solcher Gabel-Einführaufnahmen.

Der Außenabstand der beiden äußeren Leisten 3 und 5 entspricht dem Abstand der beiden Längskanten 23 und 24 der Platte 15 und die jeweiligen Längskanten sind gleich lang. Dadurch kommen dann die Füße 6, 8, 12 und 14 genau unter die Ecken der Platte 15, so daß ihre Außenflächen bündig mit der Kante der Platte 15 verlaufen. Im übrigen schließen auch sämtliche außen liegende Flächen der Füße bündig mit den zugeordneten Leistenkanten ab, so daß insgesamt nirgends Hohlkehlen, Vorsprünge oder Rücksprünge und dergleichen vorhanden sind, sondern überall nur glatte Außenflächen.

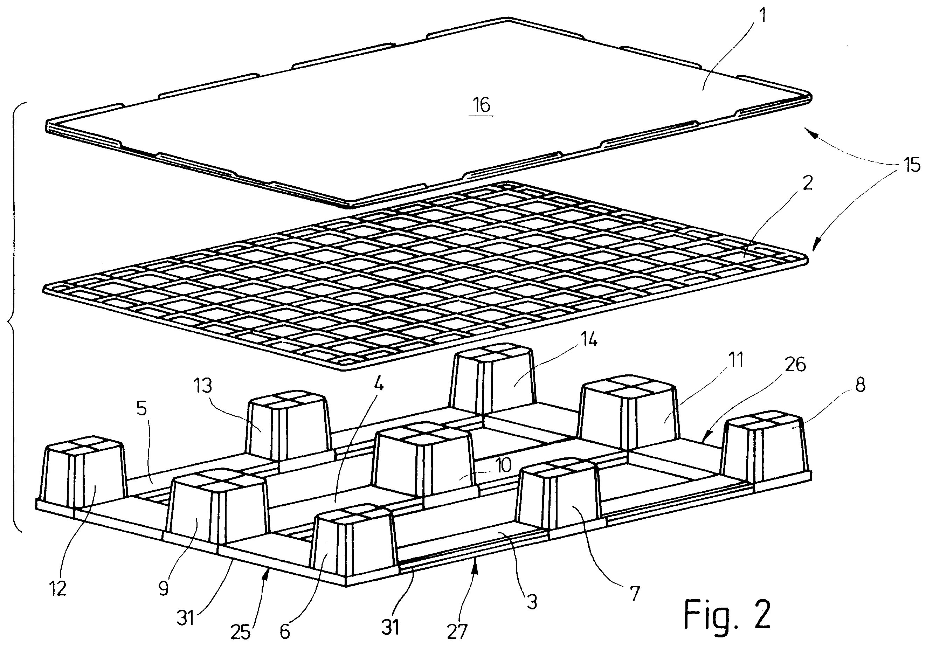

Während beim Ausführungsbeispiel gemäß Figur 1 die Füße 6 bis 14 jeweils in Dreiergruppen auf drei parallelen, längsverlaufenden Leisten 3, 4 und 5 angeformt sind, sind bei dem in Figur 2 gezeigten Ausführungsbeispiel die freien Enden der längsverlaufenden Leisten 3, 4 und 5 durch querverlaufende Leisten 25 und 26 miteinander verbunden, so daß insgesamt ein Rahmen 27 mit Füßen 6 bis 14 entsteht. Man gewinnt dadurch eine höhere Stabilität und damit noch robustere Ausbildung der Palette.

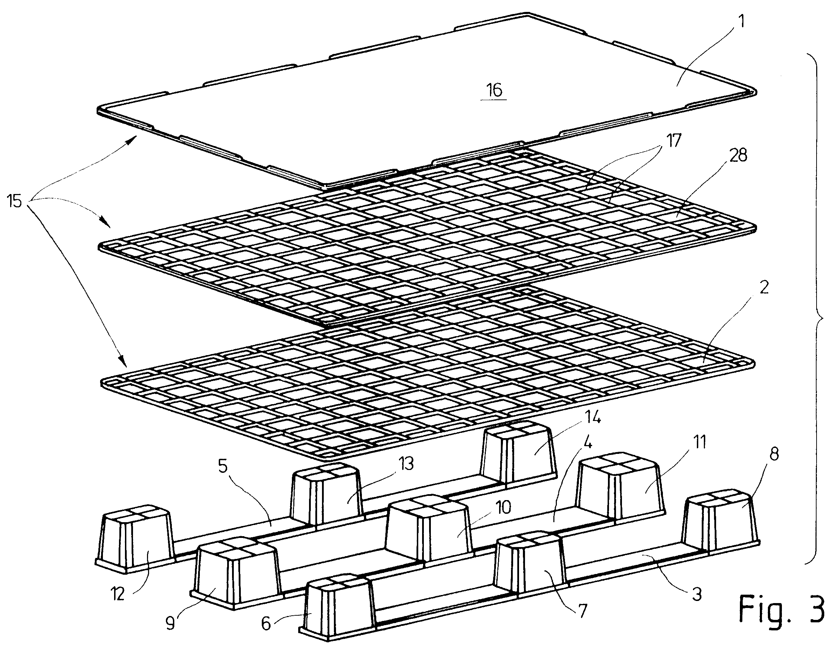

Um die Gabeln eines Gabelstaplers in die Gabel-Einführaufnahmen 21 und 22 an der Längsseite der Palette bzw. an der Gegenseite einführen zu können, müssen diese, zumindest um die Höhe der Leisten 3 und 5, angehoben werden. An den Schmalseiten dieser Palette kann die Gabel entlang dem Boden, auf welchem diese Palette steht, eingefahren werden. Bei der in Figur 2 gezeigten Palette muß beim Einfahren der Gabel von allen vier Seiten her letztere um wenigstens die Höhe der Leisten bzw. des Rahmens 27 angehoben werden. Hinsichtlich des Einfahrens der Gabel unter die Palette sind die Ausführungsbeispiele nach den Figuren 1 und 3 gleichwertig.

Die Ausführungsbeispiele der Figuren 1 und 3 unterscheiden sich vor allen Dingen dadurch, daß gemäß Figur 3 zwischen dem oberen Plattenteil 1 und dem unteren Plattenteil 2 noch ein dritter oder mittlerer Plattenteil 28 vorgesehen ist, so daß eine Sandwich-Konstruktion aus drei Plattenteilen 1, 28 und 2 vorliegt. Auch der mittlere Plattenteil ist gemäß Figur 3 mit Versteifungsrippen 17 ausgestattet. Diese können sich an der oberen und/oder der unteren Fläche des mittleren Plattenteils 28 befinden. Auf jeden Fall stehen alle Versteifungsrippen aller Plattenteile bei allen Ausführungsbeispielen immer in Verlängerung voneinander, so daß auf diese Weise die Last auch über die Versteifungsrippen auf die Platte des unteren Plattenteils optimal übertragen werden kann.

Vorstehend wurde ausgeführt, daß die Auflagefläche 16 für die zu lagernden oder zu transportierenden Güter eben und völlig glatt ist. Den Figuren 1 bis 3 kann man aber entnehmen, daß dies nicht ausschließt, rings um die oberen Plattenfläche 16 einen kleinen, beispielsweise einen Zentimeter hoch vorstehenden Zentrierrand 29 vorzusehen. Damit aber eventuell beim Reinigen verwendete Flüssigkeit, insbesondere Wasser, nicht auf der Auflagefläche 16 durch den Zentrierrand 29 gehalten wird, besteht letzterer gemäß der zeichnerischen Darstellung aus in Verlängerung voneinander stehenden Rand-Teilstücken. Über die Zwischenräume 30 kann das Wasser leicht abfließen.

An der Unterseite des Rahmens 27 bzw. der Leisten 3, 4 und 5 befinden sich Hohlkehlen 31 mit einem dem Zentrierrand 29 entsprechenden Querschnitt. Dadurch kann dann jeweils eine Palette rutschfrei auf die darunter befindliche gesetzt werden, wobei dann jeweils die Hohlkehle 31 der oberen Palette den Zentrierrand 29 der darunter befindlichen Palette aufnimmt.

## Patentansprüche

1. Palette aus sortenreinem Kunststoff und/oder aus nicht sortenreinem, gemischtem Kunststoff, vorzugsweise Recyclingkunststoff, mit einer eine im wesentlichen ebene, geschlossene Auflagefläche (16) für zu transportierendes und/oder zu lagerndes Gut aufweisenden Platte (15) mit an ihrer Unterseite, zumindest entlang des Außenumfangs angebrachten, hohlen Standfüßen (6 bis 14), zwischen denen sich Gabel-Einführaufnahmen (z.B. 21, 22) befinden, **dadurch gekennzeichnet**, daß die Platte (15) aus mindestens zwei Plattenteilen (1, 2) etwa gleich großer Fläche besteht, die beide an einer ihrer Plattenflächen mit Versteifungsrippen (17) versehen sind, wobei die umlaufenden Ränder (18, 19) der wenigstens beiden Plattenteile (1, 2) oder zumindest der beiden äußeren Plattenteile (1 und 2) dicht miteinander verbunden sind und sich alle Versteifungsrippen (17) im Platteninnern befinden, und daß die an ihrem freien Ende verschlossenen, hohlen Füße (6 bis 14) dicht mit der Platte (15) verbunden sind.

2. Palette nach Anspruch 1, dadurch gekennzeichnet, daß die unteren Enden wenigstens dreier Füße (z.B. 6, 7, 8) mittels einer gemeinsamen Leiste (3, 4, 5) verbunden und durch diese zugleich verschlossen sind.

3. Palette nach Anspruch 2, dadurch gekennzeichnet, daß die Länge der Leisten (3, 4, 5) etwa der Plattenlänge entspricht und sich an den Leistenenden sowie der Leistenmitte je ein Fuß (6 bis 14) befindet.

4. Palette nach Anspruch 1, dadurch gekennzeichnet, daß die unteren Ende wenigstens der dem umlaufenden Plattenrand (18, 19) zugeordneten Füße (6 bis 9, 11 bis 14) mittels eines aus Leisten (3, 4, 5, 25, 26) bestehenden Rahmen (27) miteinander verbunden sind.

5. Palette nach Anspruch 4, dadurch gekennzeichnet, daß parallel zu einem Rahmenleistenpaar (3, 5) eine mittlere Leiste (4) mit dem Rahmen (27) verbunden ist, die mittig einen weiteren Fuß (10) trägt.

6. Palette nach wenigstens einem der Ansprüche 2 bis 5, dadurch gekennzeichnet, daß alle Leisten (3 bis 5) bzw. der Rahmen (25) mit all seinen Leisten (3 bis 5, 25, 26) einstückig mit den Füßen (6 bis 14) gefertigt sind bzw. ist.

7. Palette nach wenigstens einem der Ansprüche 1 bis 6, dadurch gekennzeichnet, daß alle hohlen Füße (6 bis 14) mittels Rippen (20) oder dergleichen Elementen versteift sind, wobei die Rippen quer zur Plattenfläche (16) verlaufen.

8. Palette nach wenigstens einem der Ansprüche 1 bis 7, dadurch gekennzeichnet, daß die Versteifungsrippen (17) der Plattenteile (1, 2) in Längs- und Querrichtung parallel zu den Plattenkanten (18, 19) verlaufen.

9. Palette nach wenigstens einem der Ansprüche 1 bis 8, dadurch gekennzeichnet, daß die beiden Plattenteile (1, 2) miteinander durch Spiegelschweißung dicht verbunden sind.

10. Palette nach wenigstens einem der Ansprüche 1 bis 9, dadurch gekennzeichnet, daß die Unterseite der Palette (15) mit den Füßen (6 bis 14) durch Schweißen, insbesondere Spiegelschweißen, verbunden ist.

11. Palette nach wenigstens einem der Ansprüche 1 bis 10, dadurch gekennzeichnet, daß rings um die obere Plattenfläche (16) ein kleiner Zentrierrand (29) vorsteht und an den Leisten (3 bis 5) bzw. Außenleisten (3, 5, 35, 26) des Rahmens (27) entsprechende Hohlkehlen (31) vorgesehen sind.

12. Palette nach wenigstens einem der Ansprüche 1 bis 11, dadurch gekennzeichnet, daß die Plattenteile (1, 2) sowie die Leisten (3 bis 5, 25, 26) mit den Füßen (6 bis 14) bzw. der Rahmen (27) mit den Füßen (6 bis 14) jeweils im halb offenen oder geschlossenen Preßverfahren hergestellte Elemente sind.
